# EUROPEAN PATENT APPLICATION

(11) **EP 3 090 631 A1**
(43) Date of publication of application: **09.11.2016**
(21) Application number: 15166969.4
(22) Date of filing: 08.05.2015
(51) Int. Cl.: A01N 25/12, A01N 25/18, A01N 37/02

(54) **SUSTAINED RELEASE PHEROMONE FORMULATION**

(71) Applicant: Synchem Research Ltd., Bristol, Bristol BS1 6JS (GB)
(72) Inventor: MITTERDORFER, Jürgen, 9342 Gurk (AT)
(74) Representative: Basra, Sandeep

(57) **Abstract**

The invention relates to a sustained release pheromone formulation comprising a pheromone contained in a porous clay material, wherein the clay material has a weight average particle size of less than 0.2 mm, and wherein the clay material is, in one embodiment, partially coated. The invention further relates to the process of manufacturing such a formulation and its use in agriculture, as well as a method of reducing the population of a pest, e.g., a butterfly or bug such as *Diabrotica virgifera* in an agriculturally used area.

## Description

### Field of Invention

The invention relates to a sustained release pheromone formulation comprising a pheromone contained in a porous clay material. The invention further relates to the process of manufacturing such a formulation and its use in agriculture and a method of reducing the population of a pest.

### Background of the Invention

Insect pests cause considerable financial losses in agriculture. Many pesticides used to control such pests, however, have a negative impact on the environment as well as food safety. One approach known in the art is to employ pheromones, which act at low concentrations to disrupt the insects' reproductive cycle. As pheromones are naturally occurring, their environmental impact is usually negligible. However, a challenge remains in providing pheromones over a sufficient amount of time to disrupt the reproductive cycle over the entire fertile period of the insect.

As an example, the corn rootworm (*Diabrotica virgifera*) is responsible for the destruction of considerable amounts of corn. One study estimates the financial damages to be 75 million Euros for Austria in 2014 alone. In the USA approximately 14 million hectares of farming land are affected, causing losses estimated to amount to 1 billion dollars per year. In the EU, damages are estimated to amount to 0.5 billion Euros annually. In infested areas, on average, 10% of the harvest is lost due to *Diabrotica virgifera.* However, losses up to 90% occur in heavily infested areas. Additionally, *Diabrotica* is spreading rapidly to previously unaffected areas. In Austria, areas stricken with *Diabrotica* are expanding at approximately 40-80 km per year.

Conventional insecticides such as Cypermethrin, Tefluthrin and Thiacloprid are associated with numerous disadvantages such as a high toxicity in aquatic organisms and an activity that is limited to a short period of time. In an alternative, more environmentally friendly approach, pheromones can be employed to disrupt the reproductive cycle of *Diabrotica.* When female pheromones are released in a field, male *Diabrotica* become disorientated, such that insemination is prevented. A challenge, however, lies in the requirement for the pheromones to be present throughout the mating period. As pheromones can be expensive and repeated spraying of affected areas is undesirable, a slow release formulation is advantageous.

To this end, EP 1 676 480 describes a crystalline substrate to provide a sustained release of pheromones, which tackles the problem of varying environmental conditions on the speed of release. EP 1 064 843 and WO 03/061383 suggest the use of porous clay materials for the controlled emission and describe their production.

### Description of the Invention

It is the aim of the present invention to provide a sustained pheromone release formulation that is improved over the prior art. In particular, it is desired to provide a formulation that stays on or close to the plant for an extended period of time, such that insect mating can be prevented for as long as possible. Precipitation and wind can easily remove particles, such that plant protection is lost.

The invention relates to a sustained release pheromone formulation comprising a pheromone contained in a porous clay material, wherein the clay material has a weight average particle size of less than 0.2 mm.

Pheromones are chemical compounds, which trigger social responses in animals of the same species. Particularly, reproduction frequently relies on the release and recognition of pheromones. Pheromones can be used to confuse the male so that finding a mate becomes problematic and almost impossible. By reducing the amount of larvae being laid, the population can be controlled in an environmentally friendly way. In the sense of the present invention, a pheromone can be a natural pheromone or a synthetic pheromone as well as a compound with a pheromone-like action.

The pheromones according to the invention can be a single pheromone or a combination of pheromones targeted at one or several organisms. In the context of the invention, "a" means "one or more". The pheromones according to the invention include compounds selected from the group comprising: 8-methyl-decan-2-yl propionate, tetradecyl acetate, 10-methyldodecyl acetate, 11-dodecenyl acetate, methylphenyl acetate, phenylethyl propionate, (Z)-5-decenyl acetate, (Z)-7-decenyl acetate, (E)-8-decenyl acetate, (Z)-9-decenyl acetate, (Z)-9-hexadecenyl acetate, (Z)-9-tetradecenyl acetate, (Z)-10-tetradeceny! acetate, (Z)-11-hexadecenyl acetate, (Z)-11-tetradecenyl acetate, (E)-11-hexadecenyl acetate, (Z)-11-octadecenyl acetate, (E)-11-tetradecenyl acetate, (E)-12-tetradecenyl acetate, (Z,E)-9,12-tetradecadienyl acetate, (Z,E)-9,11-tetradecadienyl acetate, (Z,Z)-3,13-octadecadienyl acetate, (E,Z)-3,13-octadecadienyl acetate, (E,Z)-4,10-octadecadienyl acetate, hexadecanal, (Z)-9-hexadecenal, (Z)-11-hexadecenal, (E)-11-hexadecenal, (Z)-13-octadecenal, (Z,Z,Z)-9,12,15-octadecatrienal, (Z)-8-dodecen-1-ol, (Z)'-9-tetradecen-1-ol, (Z)-11-hexadecen-1-ol, 2,6-dimethyloctan-1-ol, (Z,E)-9,12-tetradecadien-1-ol, (Z)-13-icosen-10-one, (R,Z)-(-)-5-(1-decenyl)oxacyclopentan-2-one, cis-7-tetradecen-2-one, trans-7-tetradecen-2-one, 4,6-dimethyl-7-hydroxynonan-3-one, 2,3-dihydro-2,3,5-trimethyl-6-(1-methyl-2-butenyl)-4H-4-one, (3Z,6Z,9S,10R)-9,10-epoxy-3,6-henicosadiene, (3Z,6Z,9S,10R)-9,10-epoxy-1,3,6-henicosatriene, methyl (Z)-5-tetradecenoate, 14-methyl-1-octadecene, (Z)-3-dodecenyl (E)-2-butenoate and 2,6-dimethyloctyl formate. Preferably, a pheromone of the current invention is active against a bug or a butterfly, such as *Diabrotica, Diabrotica virgifera, Diabrotica virgifera virgifera, Cydia pomonella, Eupoecilia ambiguella, Lobesia botrana, Leptinotarsa decemlineata* or *Psylliodes.* Most preferably, the pheromone is 8-methyl-decan-2-yl propionate.

Preferably, the concentration of the pheromone is in an effective amount to prevent fertilization of the target pest, wherein the proportion of fertilized females in a treated field is up to 80%, or up to 70%, or up to 60%, or up to 50% or, most preferably, up to 40% of the total female population in the area within 60 days or, preferably, within 70 days of application of the pheromone. Most preferably, the concentration of the pheromone is in an effective amount for up to 40% of the females to be fertilized within 80 days of the application of the pheromone.

Preferably, the concentration of the pheromone in the clay material is between 0.01 and 1.0 g/kg. More preferably the concentration is between 0.02 and 0.5 g/kg, more preferably between 0.025 and 0.25 g/kg, more preferably between 0.03 and 0.1 g/kg, more preferably between 0.035 and 0.06 g/kg, more preferably between 0.037 and 0.045 g/kg and most preferably the concentration of the pheromone in the clay material is 0.039 g/kg. The inventors have found that such a concentration allows for an effective and efficient pest control.

Porous clay materials according to the invention include naturally occurring as well as industrially produced clay materials. Advantageously, such clay materials have the capability to take up pheromones and release them at a slow rate.

The porous clay materials according to the invention have a particle size of less than 0.2 mm. Advantageously, a small particle size, charge and specific surface characteristics may enable the formulation to adhere to the plant and/or its surroundings to prevent it from being washed away. This may allow for long periods of pheromone release and a highly effective insect control. This is especially true for a particle size of less than 0.2 mm of porous clay material and pheromones according to the invention.

Preferably, the porous clay material comprises a zeolite, more preferably the porous clay material is a zeolite. Preferably, the porous clay material comprises clinoptilolite, more preferably the porous clay material is clinoptilolite. Zeolite is a microporous aluminosilicate material, which allows for large amounts of pheromones to be stored and to subsequently be released slowly. Naturally occurring zeolites are formed when volcanic rocks and ash layers react with alkaline groundwater. Moreover, zeolites can also be produced by artificial synthesis. Zeolites are porous structures that can accommodate a wide variety of cations and also have a high water storage capacity. Zeolites have an ordered crystal structure with a very large number of cavities and a large active surface area (typically 400-600 m²/g). The inventors have found that clinoptilolite is a specific zeolite with especially advantageous properties for use in sustained release formulations. Alternative clay materials include sepiolite, palygorskite, Kaolinate, halloysite, metahalloysite, illite, vermiculite, montmorillonite, beidellite, nontronite, saponite, chlorite, attapulgite, zeolites, gibbsite, hematite, goethite, limonite and pyrolusite.

Preferably, the clay material according to the invention is electrostatically charged, which enables a significant amount of the formulation to remain on the plant after application, preferably until the plant is harvested. Preferably, an effective amount, i.e. an amount to prevent the fertilization of the female, remains on the plant for more than 30 days, more than 60 days, more than 70 days, more than 80 days, more than 90 days or more than 110 days. Due to the electrostatic charge, the powder may remain on the plant even withstanding heavy and frequent rainfall. Preferably, the clay material is negatively charged. More preferably, the negatively charged material is the zeolite according to the invention. The negative charge allows the zeolite to adhere to the plant, thereby ensuring a sustained released of the pheromones in the required area. In some embodiments, the powder may be seen by the naked eye on the surface of the plant, thereby allowing a quick and easy way to confirm its presence.

Preferably the clay material has an weight average particle size of between 0.1 and 200 micrometers, more preferably the weight average particle size is between 0.5 and 100 micrometers, more preferably between 1 and 50 micrometers, more preferably between 2.5 and 25 micrometers, more preferably between 5 and 10 micrometers, more preferably the weight average particle size is between 7 and 9 micrometers and most preferably the weight average particle size is approximately 8 micrometers. The inventors have found that such a particle size allows for an efficient adhesion of the particles to the plant.

As used herein, particle size is determined on the basis of the weight average particle size as measured by conventional particle size measuring techniques well known to those skilled in the art. Such techniques include, for example, sedimentation field flow fractionation, photon correlation spectroscopy, light scattering, and disk centrifugation.

By a weight average particle size in a certain range, as stated above, it is meant that at least 50% of the particles have a weight average particle size within that range, when measured by the above noted techniques. In other embodiments of the invention, at least about 70%, at least about 95% or at least about 99% of the particles have a weight average particle size within one of the ranges as listed above.

In one embodiment, the surface of the clay material is not coated. Preferably, the structure of the clay material allows for a slow release of the pheromones, even without a further coating. An uncoated clay material may have lower production costs and/or less impact on the environment.

In an alternative embodiment, the surface of the clay material is coated with a coating. Such a coating may comprise a polysaccharide, such as starch, an inorganic alkali metal and/or an organic and/or inorganic acid. More preferably, the coating is starch. Preferably, the starch may be derived from root vegetables, such as potatoes or cassava or from cereals, such as wheat, rice or maize. Preferably, a surface coating may further extend the release of the pheromones, thereby allowing the use of a smaller amount of pheromones for the same pest control effect.

The coated and non-coated formulations according to this current invention can be used alone or as a mixture. Preferably, the coated and non-coated formulations of the current invention are used in a ratio of 0.25:1 to 1:0.25, more preferably, 0.5:1 to 1:0.5. Most preferably the ratio is about 1:1.

A preferable method for the production of the formulation of the invention involves the steps of 1) grinding the porous clay material, 2) infusing the pheromone and optionally coating the porous clay material or part of the porous clay material infused with the pheromone.

The invention further comprises the use of the claimed formulation in agriculture. Preferably, the formulation is used for preventing the fertilization of a female pest, wherein the pest is selected from the group comprising butterflies and bugs, in particular *Diabrotica, Diabrotica virgifera, Diabrotica virgifera virgifera, Cydia pomonella, Eupoecilia ambiguella, Lobesia botrana, Leptinotarsa decemlineata* or *Psylliodes.*

The invention further relates to a method of reducing the population of a pest in an agriculturally used area (e.g., a cornfield), comprising contacting the agriculturally used area and/or the plants growing in said area (e.g., the corn) with the formulation of the invention. Preferably, the method prevents the fertilization of a female pest, wherein the pest is selected from the group comprising butterflies and bugs, in particular *Diabrotica, Diabrotica virgifera, Diabrotica virgifera virgifera, Cydia pomonella, Eupoecilia ambiguella, Lobesia botrana, Leptinotarsa decemlineata* or *Psylliodes.*

Contacting may be carried out by spraying the agriculturally used area. Preferably, only one contacting per growth cyclus of the plant is required to reduce the population of the pest significantly, thus also significantly reducing damages to the crop. Preferably, the damages are reduced by at least 20%, at least 30%, at least 40%, at least 50%, at least 60%, at least 80%, or at least 90%.

The formulations according to this invention can be applied to the area, e.g., the cornfield, in an amount of about 3-5 kg/ha, preferably, about 4 kg/ha in an aqueous solution, preferably, in about 200 to about 400 liters of water per hectare. The fields are sprayed before the start of the mating season of the targeted pest. For example, when targeting *Diabrotica,* the ideal time to spray the fields is mid to late June, preferably as late as possible in June.

### Examples and Experimental Data

In order to ascertain whether the described pest control strategy is successful, zeolite with a weight average particle size of 8 micrometers and impregnated with the pheromone 8-methyl-decan-2-yl propionate, which is active against *Diabrotica,* was sprayed onto a cornfield. When viewing the rate of unfertilised females in a treated cornfield versus untreated control, it could clearly be seen that treatment was associated with a significant increase of unfertilised females. The duration of action was more than 6 weeks.

In another experiment, it was the aim to evaluate the efficacy of pheromone impregnated zeolite particles against *Diabrotica* at high density. In the experiment, corn plants were tested in cages with high numbers of *Diabrotica* per cage. The treated group showed a strong increase in the number of unfertilised females when compared to untreated control plants. The results show that even at high densities of *Diabrotica,* treatment still shows a strong effect.

## Claims

1. A sustained release pheromone formulation comprising a pheromone contained in a porous clay material, **characterised in that** the clay material has a weight average particle size of less than 0.2 mm.

2. The formulation according to claim 1, **characterised in that** the clay material is a zeolite, preferably wherein the zeolite is clinoptilolite.

3. The formulation according to any one of the previous claims, **characterised in that** the pheromone is 8-methyl-decan-2-yl propionate.

4. The formulation according to any one of the previous claims, **characterised in that** the concentration of the pheromone in the clay material is effective to prevent fertil ization of a female pest, wherein the concentration of the pheromone in the clay material preferably is between 0.01 and 1.0 g/kg clay material.

5. The formulation according to any one of the previous claims, **characterised in that** the clay material has a weight average particle size of between 0.1 and 200 micrometers.

6. The formulation according to any one of the previous claims, **characterised in that** the surface of the porous clay material is not coated.

7. The formulation according to claims 1 to 5, **characterised in that** the surface of the porous clay material is covered with a coating.

8. A formulation according to claims 1 to 5, comprising non-coated and coated porous clay material, preferably in a ratio of about 1:1.

9. The formulation according to claim 7 or 8, **characterised in that** the coating comprises a polysaccharide, such as starch, an inorganic alkali metal or an organic or inorganic acid.

10. A sustained release pheromone formulation of claims 1 to 9 obtainable by the following steps:
(1) grinding the porous clay material,
(2) infusing the pheromone, and
(3) optionally, coating the porous clay material

11. Process for manufacturing a sustained release pheromone formulation according to any one of the claims 1 to 10, comprising
(1) grinding the porous clay material,
(2) infusing the pheromone, and
(3) optionally, coating the porous clay material.

12. Use of the sustained release pheromone formulation according to claims 1 to 10 in agriculture.

13. The use according to claim 12 for preventing the fertilisation of a female pest selected from the group comprising butterflies and bugs, wherein the bug preferably is *Diabrotica virgifera.*

14. The use according to claims 12 to 13, wherein the formulation stays on the plant for at least 60 days after application.

15. A method of reducing the population of a pest in an agriculturally used area, comprising contacting the agriculturally used area and/or the plants growing in said area with the formulation of any of claims 1 to 10, wherein the formulation preferably prevents the fertilisation of a female pest selected form the group comprising butterflies and bugs, wherein the bug preferably is *Diabrotica virgifera.*
